# EUROPEAN PATENT SPECIFICATION

(11) **EP 3 368 398 B1**
(45) Date of publication and mention of the grant of the patent: **18.09.2019**
(21) Application number: 16810043.6
(22) Date of filing: 31.10.2016
(51) Int. Cl.: B62K 15/00

(54) **FOLDABLE FRAME**
ZUSAMMENKLAPPBARER RAHMEN
CADRE PLIABLE

(30) Priority: 29.10.2015 IT UB20155333
(43) Date of publication of application: 05.09.2018
(73) Proprietor: Acta Srl, 56122 Pisa Fraz. Tirrenia (PI) (IT)
(72) Inventor: MAZZINI, Davide, 56011 Calci (PI) (IT); CECCOTTI, Antonio, 56017 Pontasserchio, San Guiliano (Pisa) (IT); BURCHIANTI, Alessandro, 56048 Saline Di Volterra (PI) (IT)
(74) Representative: Lunati & Mazzoni S.r.L.
(86) International application number: PCT/IB2016/056554
(87) International publication number: WO 2017/072740

(56) References cited:
- EP-A1- 0 648 667
- WO-A1-94/19230
- CN-A- 101 513 912
- CN-B- 102 700 663
- CN-Y- 2 143 582
- CN-Y- 2 406 906
- IT-A1- MI20 110 272
- JP-A- H07 196 062
- JP-A- H08 156 861
- US-A- 575 266
- US-A- 4 111 447

## Description

The present invention relates to a foldable frame of the type as recited in the preamble of the first claim.

In particular, the invention relates to a frame suitable to be used for the realization of a foldable cycle, i.e. a vehicle having one front wheel and one or more rear wheels, of which preferably at least one drive wheel. Alternatively, the front wheel is the drive wheel.

For example, the foldable cycle may be a foldable motorcycle, a foldable moped or, preferably, a foldable bicycle.

As known, a folding frame has a configuration of use in which it is extended allowing the use of the cycle and a transport configuration in which it is folded back on itself with a consequent reduction in overall size so as to facilitate the transport and / or storage of the motorcycle / scooter / bicycle.

The folding frame provides for, usually, a front fork supporting the front wheel and the handlebars, a rear fork supporting the rear wheel and the saddle with the relative support upright and a frame connecting the front fork to the rear fork and provided with a main diagonal strut and, in some cases a crossbar, i.e. the upper horizontal pipe.

In order to permit the folding of the frame, the main strut is divided into two portions, one front and one rear, hinged together.

Such hinge divides the folding frame into two half-frames, a front one composed of a first portion of the strut, the front fork, the front wheel and the handlebar; and a rear one composed of the second portion of the strut, rear fork, rear wheel and saddle.

Such half-frames are mutually rotatable so that in the transport configuration the frame has minimal dimensions and the half-frames are mutually superposed, while in the configuration of use the half-frames are aligned with each other.

In some cases, the currently known folding frames have a telescopic structure, i.e. are composed of one or more telescopic sections which, by varying their length, define the transport configuration drawing the forks towards each other and the configuration of use distancing the forks.

Foldable frame are disclosed in CN101513912A, CN102700663B, JPH08156861A, CN2406906Y, JPH07196062A, US4111447A, ITMI20110272A1, EP0648667A1, CN2143582Y, WO9419230A1 and US575266A.

The prior art mentioned above has several significant drawbacks.

A first drawback is that the known folding frames define a particularly bulky transport configuration.

This drawback becomes apparent when one considers that, in frames with hinges, the two half-frames are juxtaposed, determining a large thickness for the frame. This drawback is also evident in the telescopic folding frames in which the reduction of the overall dimensions is limited by the fact that the frame, when compressed on itself, is not able to properly juxtapose the wheels.

Another drawback is the creation of clearance at the joining hinge of the half-frames, which may determine difficulty of use and instability in the bicycle.

In particular, the creation of such clearance, combined with the large loads acting at the hinge, can lead to a rapid collapse of said hinge and, thus, breaking of the frame.

This drawback is also evident in bicycles with a telescopic frame.

In fact, in these frames clearances are created at the joining / sliding area between the sliding elements of the frame such as to render the bicycle insecure and unstable.

Moreover, the presence of elements sliding one inside the other involves the risk of dirt depositing between one element and the other opposing the sliding between the elements.

In addition, such dirt can damage the protective surface coating, exposing the frame to rust or other deterioration phenomena in the more delicate areas of the coupling.

Another disadvantage is that the folding frames in use require complex clamping systems of the frame in the configuration of use.

Such systems, in addition to determining an additional cost, increase the difficulty of use of the frame and, above all, are fragile and subject to frequent damage.

In this situation the technical purpose of the present invention is to devise a folding frame able to substantially overcome the drawbacks mentioned above.

Within the sphere of said technical purpose one important aim of the invention is make a folding frame which when closed has reduced dimensions.

Another important aim of the invention is to obtain a folding frame which is reliable and safe.

The technical purpose and specified aims are achieved by a folding frame as claimed in the appended claim 1.

Preferred embodiments are evident from the dependent claims.

The characteristics and advantages of the invention are clearly evident from the following detailed description of a preferred embodiment thereof, with reference to the accompanying drawings, in which:
**Fig. 1** shows a folding frame according to the invention in the configuration of use;
**Fig. 2** shows the folding frame in Fig 1 in the transport configuration;
**Fig. 3** shows a possible folding cycle fitted with a folding frame according to the invention in the configuration of use;
**Fig. 4** shows the folding frame in Fig 3 in the transport configuration;
**Fig. 5** is the assembly of Fig. 1.
**Fig. 6** shows a cross-section of the assembly of Fig. 5.
**Fig. 7** shows the assembly in Fig. 5 in an intermediate position between the two configurations of transport and use;
**Fig. 8** shows a cross-section of the assembly of Fig. 7.
**Fig. 9** shows the assembly of Fig. 5 in another intermediate position between the configurations of transport and use;
**Fig. 10** shows a cross-section of the assembly of Fig. 9.
**Fig. 11** shows the assembly of Figs. 5-10 in the transport configuration;
**Fig. 12** shows a cross-section of the assembly of Fig. 12.

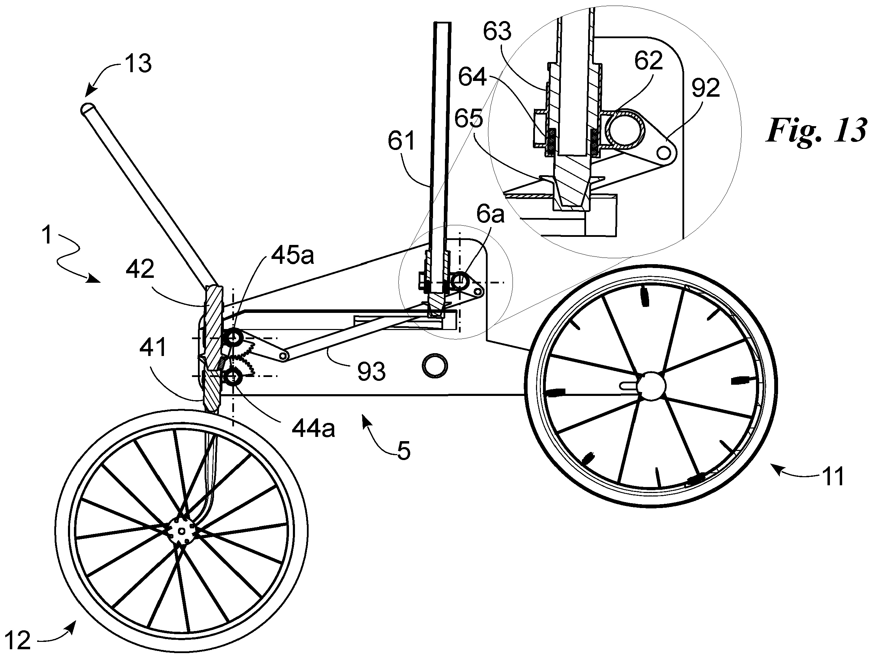

**Fig. 13** shows another folding frame according to the invention in the configuration of use;

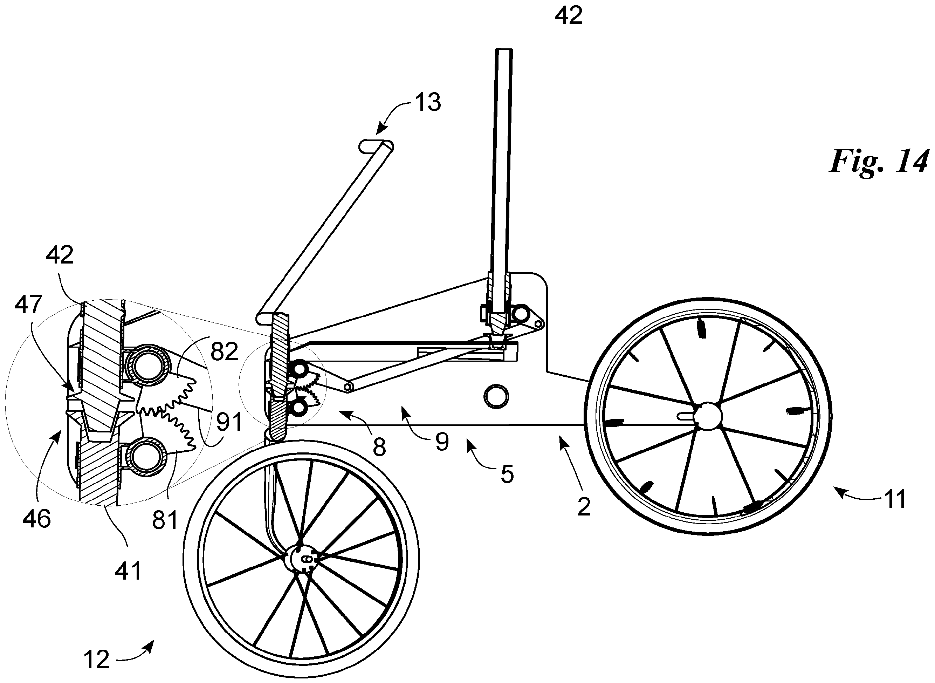

**Fig. 14** is the frame in Fig. 13 in an intermediate configuration between that of use and transport; and

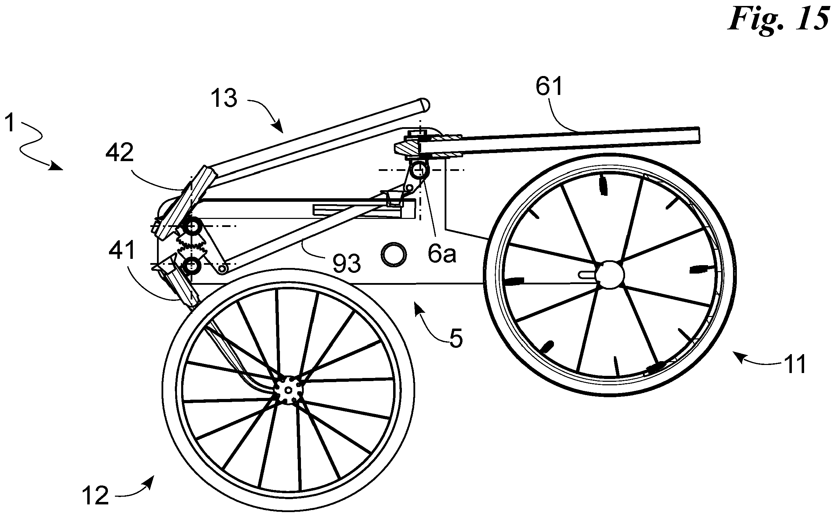

**Fig. 15** is the frame in Fig. 13 in the transport configuration.

Herein, the measures, values, shapes and geometric references (such as perpendicularity and parallelism), when used with words like "about" or other similar terms such as "approximately" or "substantially", are to be understood as except for measurement errors or inaccuracies due to production and/or manufacturing errors and, above all, except for a slight divergence from the value, measure, shape or geometric reference which it is associated with. For example, said terms, if associated with a value, preferably indicate a divergence of not more than 10% of said value.

In addition, where used terms such as "first", "second", "main" and "secondary" do not necessarily refer to an order, a priority relationship or relative position, but may simply be used to more clearly distinguish different components from each other. With reference to said drawings, reference numeral 1 globally denotes the folding frame according to the invention.

It is suitable to be used for the realization of a folding cycle **10,** i.e. a means of transport, such as a bicycle, a tricycle, a scooter or a motorcycle equipped with a folding frame 1.

Preferably, the folding cycle 10 is a bicycle.

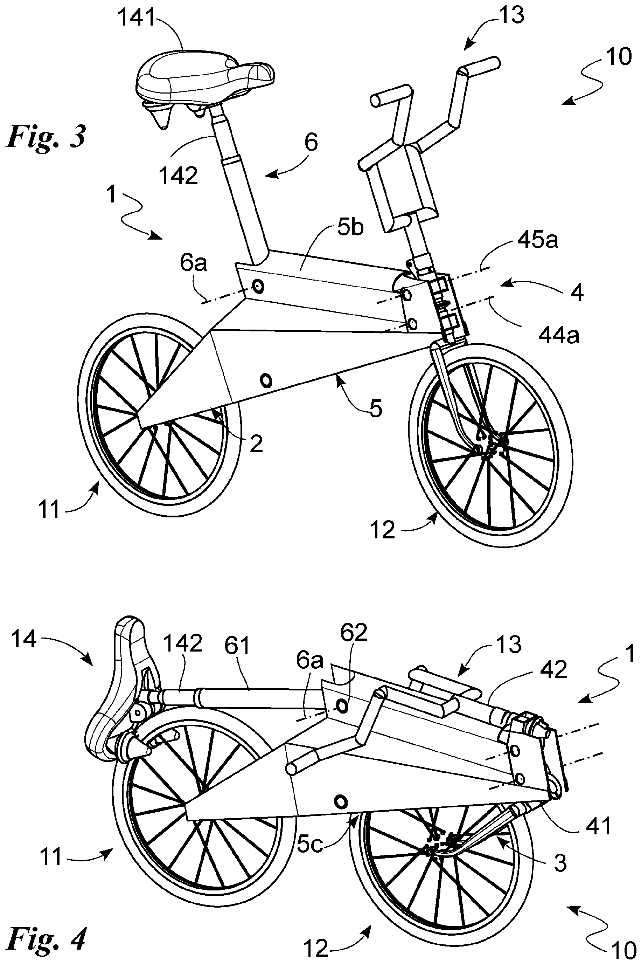

The folding cycle 10, as illustrated in Figs. 3 and 4, comprises the folding frame 1 and engaged to it: at least one rear wheel **11;** at least one front wheel **12;** a handlebar **13** and at least one seat **14.**

It is to be noted that in this document terms such as, "front", "rear", "forward" and "rearward" are to be understood as referring to the usual direction of advancement of the folding cycle 10 and, therefore, of the frame 1.

Preferably, the folding cycle 10 comprises a single front wheel 12.

In particular, the folding cycle 10 comprises a single rear wheel 11 or, alternatively, two rear wheels 11.

Said at least one rear wheel 11 is of the drive type, i.e. adapted to push and, therefore, control the progress of the folding cycle 10, while the front wheel 12 is of the type driven by the rear drive wheel 11.

In particular, in order to have the rear wheel 11 as the drive wheel, the folding cycle 10 may comprise, associated to the frame 1, a motor, suitably electric or combustion, and, therefore, the folding cycle 10 may be a moped or a motorcycle. Alternatively, the folding cycle 10 may comprise, associated to the frame 1, a movement member suitable to exploit the muscular strength of the upper or, preferably, lower limbs of a user and, therefore, the folding cycle 10 may be a tricycle, or, preferably, a bicycle (Figs. 3 and 4).

The movement member may comprise two pedals, at least one drive sprocket receiving the movement from the pedals; one or more driven sprockets discharging the movement onto the rear 11 or front wheel 12; a chain suitable to pick up the movement from the drive sprocket and bring it to the driven sprocket; and, optionally, a gearbox adapted to vary the sprockets engaging the chain.

It is to be noted how, optionally, the transfer of movement from the motor and / or from the pedals of the transmission member to the drive wheel 11/12 can be obtained with a cardan transmission.

In a further alternative, the folding cycle 10, suitably in the case of a tricycle or bicycle, may comprise, associated to the frame 1, a movement member and a suitably electric motor and, therefore, the folding cycle 10 may be a pedal-assisted bicycle.

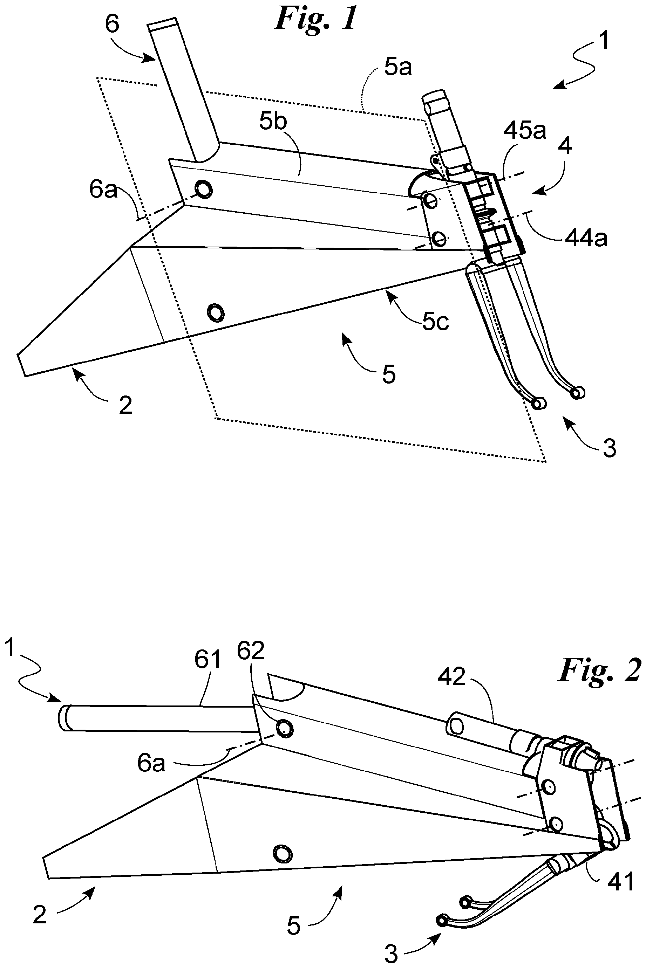

The folding frame 1 and, thus, the cycle 10 are available in a transport configuration (Figs. 2 and 4) in which they have reduced dimensions and in a configuration of use (Figs. 1 and 3) in which they have greater dimensions than the transport configuration and allow normal use of the bicycle / moped / motorcycle.

The folding frame 1, illustrated in Figs. 1 and 2, comprises at least one rear fork **2** suitable to support a rear wheel 11; at least a front fork **3** suitable to support a front wheel 12; a steering bar **4** integral with the front fork 3 and suitable to be connected to a handlebar 13; and a supporting structure 5 connecting the forks 2 and 3 and, in particular, the steering bar 4 to the rear fork 2.

Preferably, the folding frame 1 comprises a single rear fork 2 or, alternatively, two rear forks 2.

The rear fork 2 may have a U-shaped profile defining two arms designed to enclose between them the rear wheel 11. Alternatively, it may be of the single-arm type and, therefore, having a single support arm for the rear wheel 11.

In the same way as the rear fork, the front fork 2 may have a U-shaped profile defining two arms designed to enclose between them the front wheel 12. Alternatively, it may be of the single-arm type and, therefore have a single support arm for the front wheel 12.

Preferably, the folding frame 1 comprises a single front fork 3.

Subtended between the two forks 2 and 3 and, in particular, between the rear fork 2 and the steering bar 4, the frame has the supporting structure 5.

The supporting structure 5 defines a barycentric lying plane **5a** with respect to which it extends almost symmetrically.

This barycentric lying plane 5a is suitable to position itself, when the cycle 10 and, therefore, the frame 1 are in use, substantially parallel to the gravitational gradient and, in particular, substantially perpendicular to the ground, i.e. to the support surface of the folding cycle 10.

The supporting structure 5 has an upper surface **5b** and, preferably a lower surface. It is to be noted that the terms "upper" and "lower" shall be construed as referring to the ground with the folding cycle 10 and therefore, the folding frame 1, placed in the normal position of use, i.e. in the sense that lower is indicative of a relative position closer to the ground while upper is indicative of a relative position more distant from the ground.

The supporting structure 5 may comprise a preferably U-shaped plate so as to define an inner housing **5c** having at least one open section for access to the housing. Suitably, said open section is proximal to and faces the ground.

In particular, the supporting structure 5 comprises a folded laminate which extends flat.

Alternatively, the supporting structure 5 may comprise one or more sections substantially joining the forks 2 and 3.

In addition, the folding frame 1 may comprise a coupling body **6** of the seat 14 to the supporting structure 5.

In particular, in the case of a folding cycle 10 in the form of a bicycle, the seat 14 comprises a saddle **141** and a saddle bar **142** suitably identifiable in a preferably cylindrical section and the coupling body 6 comprises a hollow section **61** suitable to slidingly house the saddlebar 142; and a stop body suitable to block, appropriately by clamping, the sliding of the saddle bar 142 with respect to the hollow section 61.

The hollow section 61 defines a main extension axis.

The section 61 can slide with respect to the supporting structure 5 along said main extension axis and, therefore, the coupling body 6 may comprise a guide **63** suitable to allow the hollow section 61 to perform said sliding; and appropriately an end stop **64** to said sliding.

The end stop 64 is integral with the supporting structure 5 and defines for the hollow section 61 a position of minimum protrusion of said hollow section 61 from the supporting structure 5.

The end stop 64 is identifiable in a blind hole in which the hollow section 61 fits going to stop against the end of the end stop.

The coupling body 6 may comprise an extraction spring **65** of the hollow section 61 from the end stop.

Said extraction spring 65 is suitable to work in opposition to the weight acting on the seat 14. Therefore, when the operator is on the seat 14 the weight overcomes the force of the spring 65 allowing the section 61 to slide in the guide engaging in the end stop 64. When the operator is not on the seat 14 the extraction spring 65 controls the exit and, therefore, the disengagement of the hollow section 61 from the end stop 64.

Moreover, the coupling body 6 may comprise a joint **62** suitable to allow the hollow section 61 and, appropriately, the stop body and the seat 14 to rotate relative to the supporting structure 5 around a folding axis **6a.**

Conveniently, the joint 61 is suitable to hinge to the supporting structure 5, the hollow section 61, the guide and the extraction spring.

Preferably, the folding axis 6a is substantially perpendicular to the barycentric lying plane 5a.

The joint 62 allows the hollow section 61 and the seat 14 to rotate relative to the supporting structure 5 so that, in the transport configuration of the folding frame 1, the hollow section 61 is proximal to the rear fork 2 (Fig. 2) and, in particular, juxtaposed and, to be precise, substantially adjacent to the rear wheel 11 (Fig. 4); and, in the configuration of use, the hollow section 61 is distal from the rear fork 2 (Fig. 1) and, thus, from the rear wheel 11 (Fig. 3).

Lastly, the coupling body 6 may comprise means for blocking the rotation of the hollow section 61 around the folding axis 6a suitable to stably block, for example by clamping, the hollow section 61 in at least said configurations.

Said blocking means are of the resolvable type.

Engaged to the supporting structure 5 and integral with the front fork 3, the folding frame 1 presents the steering bar 4.

The steering bar 4, as better described below, is suitable to define, in the configuration of use, a steering axis of the frame 1, i.e. the axis suitable to permit a rotation of the front fork 3 and of the steering bar 4 with respect to supporting structure 5 by means of which to control the direction of advancement 10 of the cycle.

The steering axis lies substantially on the barycentric plane 5a.

The steering bar 4 comprises a steering tube suitable to rotate relative to the supporting structure 5 about the steering axis.

The steering tube comprises a first portion **41** suitable to be rigidly constrained to the front fork 3 and defining a first longitudinal axis **41a** preferably barycentric to said first portion 41; a second portion **42** suitable to be rigidly constrained to the handlebar 13 and defining a second longitudinal axis **42a** preferably barycentric to said second portion 42.

In order to allow the steering tube of the steering bar to rotate around the steering axis, the steering bar 4 comprises a head tube interposed between the supporting structure 5 and steering tube suitable to define said steering axis for said tube.

The head tube comprises a first sector **43a** interposed between the supporting structure 5 and the first portion 41 and a second sector **43b** interposed between the supporting structure 5 and the second portion 42.

The sectors 43a and 43b are identifiable in two distinct elements and, in particular, in two hollow sections.

The first sector 43a defines a first axis of rotation of the first portion 41 relative to the structure 5 suitably substantially coincident with the first longitudinal axis 41a. The second sector 43b defines a second axis of rotation of the second portion 42 relative to the structure 5 suitably substantially coincident with the second longitudinal axis 42a.

The first portion 41 is identifiable in a circular section and, in particular, cylindrical having, suitably, a first axis 41a lying substantially in the barycentric plane 5a. The second portion 42 is identifiable in a circular section and, in particular, cylindrical having, suitably, a second axis 42a lying substantially in the barycentric plane 5a.

Suitably, the portions 41 and 42 have almost the same section.

The first sector 43a is suitable to permit at least the first portion 41 to rotate with respect to said first sector 43a and, thus, to the supporting structure 5 about the first longitudinal axis 41a. In the same way, the second sector 43b is suitable to permit at least the second portion 42 to rotate with respect to said second sector 43b and, thus, to the supporting structure 5 about the second longitudinal axis 42a. Consequently, when the frame 1 is in the configuration of use, the longitudinal axes 41a and 42a substantially coincide (as hereinafter described) and define the steering axis for the front fork 3 and for the steering bar 4 with respect to the supporting structure 5. Consequently, the steering axis is substantially coincident with the longitudinal axes 41a and 42a.

In order to allow the change of configuration of the folding frame 1, the steering bar 4 comprises a first hinge **44** suitable to hinge, suitably idly, the first portion 41 to the structure 5 defining a first axis of rotation **44a** of the first portion 41 with respect to the supporting structure 5; and a second hinge **45** suitable to hinge, suitably idly, the second portion 42 to the structure 5 defining a second axis of rotation **45a** of the second portion 42 with respect to the structure 5.

The first hinge 44 may be suitable to hinge, in addition to the first portion 41 and suitably idly, the first sector 43a to the structure 5.

The first hinge 44 identifies the only point of constraint of the first portion 41 and, preferably, of the first sector 43a to the structure 5.

In particular, the first sector 43a is interposed between the first portion 41 and first hinge 44 so that the first hinge 44, rotating the first sector 43a around the first axis of rotation 44a, also rotates the first portion 41 around the first rotation axis 44a. The first portion 41 and, preferably, the first sector 43a are hinged and, therefore, rotatable, suitably idly, with respect to the first hinge 44 around the first axis of rotation 44a.

The first axis of rotation 44a is substantially transverse, and preferably substantially perpendicular, to the first longitudinal axis 41a and thus to the second longitudinal axis 42a. More preferably, it is substantially perpendicular to the barycentric lying plane 5a so as to rotate the first portion 41 while maintaining the first longitudinal axis 41a in the plane 5a.

The second hinge 45 may be suitable to hinge, in addition to the second portion 42 and suitably idly, the second sector 43b to the structure 5.

It appropriately identifies the only point of constraint of the second portion 42 and, in particular, of the second sector 43b to the structure 5.

In particular, the second sector 43a is interposed between the second portion 42 and second hinge 45 so that the second hinge 45, rotating the second sector 43a around the second axis of rotation 45a, also rotates the second portion 42 around the second rotation axis 45a.

The second portion 42 and, preferably, the second sector 43b are hinged and, thus, rotatable, suitably idly, with respect to the second hinge 45 around the second axis of rotation 45a.

The second axis of rotation 45a is substantially transverse, and in particular, almost perpendicular to the second longitudinal axis 42a and, thus, to the first axis 41a. More preferably, it is substantially perpendicular to the barycentric lying plane 5a so as to rotate the second portion 42 while maintaining the second longitudinal axis 42a in the barycentric plane 4a.

The second axis of rotation 45a is separate from and substantially parallel to the first axis of rotation 44a.

The distance between the rotation axes 44a and 45a is substantially between 10 cm and 5 cm.

The hinges 44 and 45 are suitable to allow the portions 41 and 42 to rotate in opposite directions to each other and independently. In detail, they are suitable to enable the first group, composed of the first portion 41 and the first sector 43a, and the second group, composed of the second portion 42 and the second sector 43b, to rotate in opposite directions to each other and independently. Alternatively, the steering bar 4 may comprise a connection mechanism **8** suitable to permit a transfer of movement between the hinges 44 and 45 allowing at least the portions 41 and 42 to simultaneously rotate in opposite directions to each other.

The connection mechanism 8 may comprise a first toothed wheel **81** integral with the first portion 41 and precisely with the first hinge 44, a second toothed wheel **82** integral with the second portion 42 and precisely with the second hinge 45.

The first toothed wheel 81 is suitable to rotate around the first axis of rotation 44a and the second toothed wheel 82 is suitable to rotate around the second axis of rotation 45a.

The toothed wheels 81 and 82 are mutually connected so as to have a transfer of movement between the hinges 44 and 45 and, precisely, to rotate in opposite directions to each other and, suitably, with speed directly proportional to the amplitude that the relative portion 41 or 42 must make to change the configuration. In addition, the steering bar 4 may comprise a synchronization mechanism **9** suitable to permit the movement, suitably around the folding axis 6a, of the hollow section 61 simultaneously with one of the portions 41 or 42.

Appropriately, the synchronization mechanism 9 is suitable to allow a movement of the hollow section 61 and, if present, of the guide and of the extraction spring simultaneously and in the same direction as the second portion 42. Alternatively, the synchronization mechanism 9 is suitable to allow a movement of the hollow section 61 and, if present, of the guide and of the extraction spring simultaneously and in the opposite direction to the first portion 41.

In both cases, the synchronization mechanism may comprise an active lever **91** integral with the second portion 42 and, precisely, with the second hinge 45, a passive lever **92** integral with the hollow profile 61 and in detail with the guide; and an arm **93** hinged at the ends to said levers so as to allow a transfer of movement between the levers.

The active lever 91 is suitable to rotate around the second axis of rotation 45a. It extends radially with respect to the second axis of rotation 45a.

The passive lever 92 is suitable to rotate around the folding axis 6a. It extends radially with respect to the folding axis 6a.

Preferably, the steering bar 4 may comprise the connection mechanism 8 and the synchronization mechanism 9.

In order to ensure adequate structural rigidity when the frame 1 is in the configuration of use, at least one out of an interference constraint **46** suitable to constrain the portions 41 and 42 together by mutual interference; and a magnetic constraint **47** suitable to constrain the portions 41 and 42 together by their mutual magnetic attraction, may be added to the steering bar 4.

Preferably, the steering bar 4 may comprise both the interference constraint 46 and the magnetic constraint 47.

The interference constraint 46 is suitably of the resolvable type so as to keep the portions 41 and 42 in contact with each other when the frame 1 is in the configuration of use.

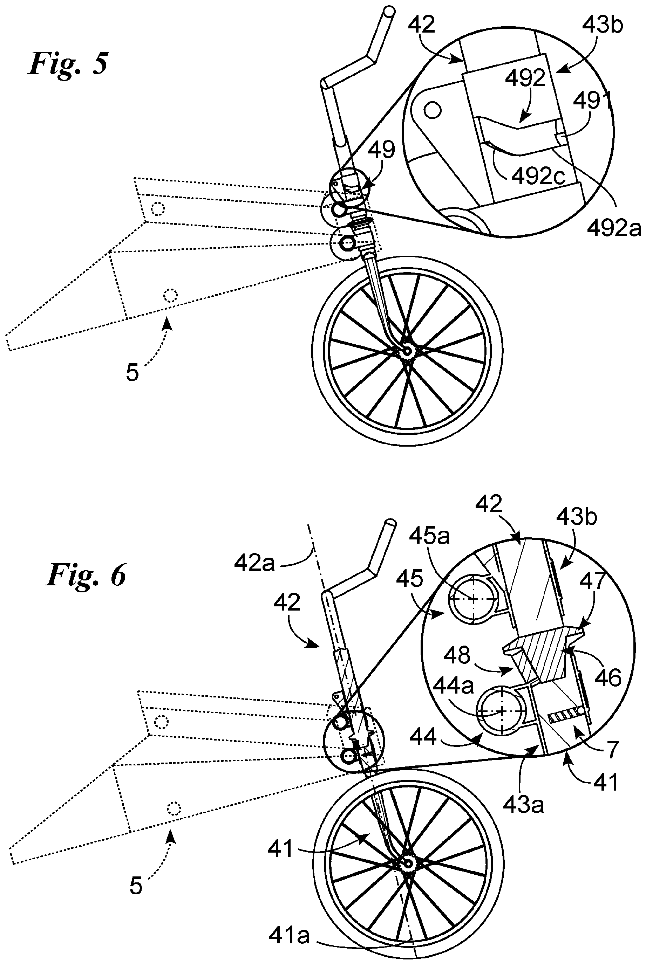

As noted in the enlargements of Figs. 6, 8 and 10, it may comprise a first engagement profile **461** integral with the first portion 41; and a second engagement profile **462** integral with the second portion 42 and suitable to engage by interference to the first engagement profile 461.

The profiles 461 and 462 are substantially mutually counter-shaped.

The first engagement profile 461 is identifiable in a recess made on the first portion 41 and extending substantially along the first longitudinal axis 41a. Appropriately, the recess and, thus, the first profile 461 have a tapered cross-section with a maximum cross-section proximal to the second portion 42. More appropriately said cross-section is a truncated cone.

The second profile 462 comprises a body protruding from the second portion 42 and extending substantially along the second longitudinal axis 42a. It is thus suitable to fit into the seat defined by the first engagement profile 461 so as to allow the portions 41 and 42 to penetrate each other realizing the interference constraint 46 between the portions 41 and 42.

Appropriately, the second profile 462 has a tapered cross section with a maximum cross-section proximal to the second portion 42. More suitably said second profile 462 is a truncated-cone shape.

The magnetic constraint 47 is suitably of the resolvable type so as to keep the portions 41 and 42 in contact each other when the frame 1 is in the configuration of use.

It comprises a ferromagnetic body **471** constrained to the first portion 41; and a magnetic body **472** constrained to the second portion 42 and suitable to attract the magnetic body 471 at least when the folding frame 1 is in the configuration of use. The ferromagnetic body 471 is integral with the first portion 41 and, in particular, arranged in correspondence with the end of the first sector 43a proximal to the second portion 42.

The magnetic body 472 is integral with the second portion 42. To be precise, it is arranged in correspondence with the end of the second sector 43b proximal to the first portion 41 so that, when the folding frame 1 is in the configuration of use, it comes into contact with the ferromagnetic body 471 realizing the magnetic constraint 47.

Appropriately, the ferromagnetic 471 and magnetic bodies 472 are identifiable in annular bodies integral with the ends of the first portion 41 and second portion 42 respectively.

Furthermore, to ensure the torque transfer between the portions 41 and 42 and, accordingly, allow the operator to control the rotation, about the axis of steering, of the front fork 3 and, thus, of the front wheel 12 by means of the handlebar 13, the steering bar 4 comprises a rotational constraint **48** between the portions 41 and 42 suitable to prevent their reciprocal rotation around the longitudinal axes 42a and 41a and, thus the steering axis of the frame 1, when the folding frame 1 is in the configuration of use.

The rotational constraint 48 is appropriately of the resolvable type so as to prevent a mutual rotation between the portions 41 and 42 substantially only when the portions 41 and 42 are substantially in mutual contact and, therefore, the frame 1 is in a configuration of use.

As shown in the enlargements of Figs. 6, 8 and 10, it comprises a tooth **481** constrained to the second portion 42 and preferably to the second section 462; and a seat **482** for the tooth 481 constrained to the first portion 41, preferably to the first sector and, preferably, made on the ferromagnetic body 471.

The tooth 481 extends substantially parallel to the second axis 42a, while the seat 482 extends almost parallel to the first axis 41a.

In order to have at least one of the constraints 46, 47 and 48 and, preferably all the constraints 46, 47 and 48 resolvable, the steering bar 4 comprises a mutual translation block **49** between the portions 41 and 42.

The translation block 49 is suitable to allow a mutual translation between the portions 41 and 42 loosening said constraints, i.e. an at least partial exit of the tooth 481 from the seat 482, and at least partial exit of the second profile 462 from the first engagement profile and/or a distancing between the magnetic and ferromagnetic bodies 471 and 472.

In detail, the translation block 49 is suitable to allow a translation of the second portion 42 along the second longitudinal axis 42a with respect to the first portion 41 and to the sectors 43a and 43b preferably only when the front fork 3 is inclined in relation to the plane 5a by an angle substantially greater than a predefined steering angle.

The steering angle is calculated, in both directions, in relation to the barycentric lying plane 5a, and is substantially at least ± 60°, in particular ± 90° and more specifically ± 120°.

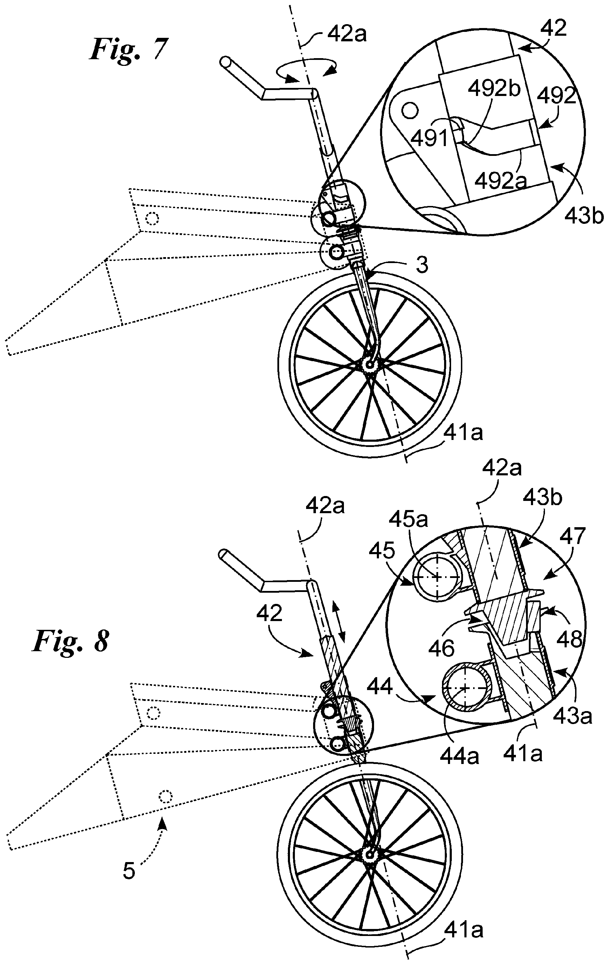

The translation block 49, highlighted in the enlargements in Figs. 5 and 7, comprises a slider **491** integral with the second portion 42; and a sliding slot **492** for the slider 491.

The slider 491 may be a pin protruding from the second portion 491 in a direction almost perpendicular to the second longitudinal axis 42a.

The sliding slot 492 is made on the second sector 43b.

It has a sliding sector **492a** proximal to the first portion 41; and at least one disengagement sector **492b** distal from the first portion 41.

The sliding sector 492a has an angular extension substantially at least double the steering angle. Consequently, the angular extension of the sliding sector 492a is at least 120°, in detail 180° and, more specifically, 240°.

It is a substantially constant distance from the first portion and appropriately, less than the distance of the disengagement sector 492b from the first portion. These distances are calculated in the configuration of use and along the second longitudinal axis 42a.

Preferably, the difference between said distance of the disengagement sector 492b from the first portion 41 and said distance of the sliding sector 492a from the first portion 41 is substantially at least equal to the stroke of the second portion 42 and, thus of the tooth, needed to permit the loosening of the rotational constraint 48.

More preferably, said difference and, thus, the stroke of the second portion 42 is at least 0.5 cm and, in detail, is substantially comprised between 1.5 cm and 0.5 and preferably substantially equal to 0.8 cm.

Lastly, in order to have a smooth passage of the slider 491 between the two sectors 492a and 492b the sliding slot comprises at least one connection sector **492c** between the sliding 492a and disengagement 492b sectors.

The sliding slot 492 has an angular amplitude of 360° and, in particular, comprises a sliding sector 492a, disengagement sector and two connection sectors 492c interposed between the sectors and 492a and 492b.

Lastly, the folding cycle 10, particularly in the case of a folding bicycle, may comprise a seat that can be used in the transport configuration.

This seat is identifiable in a plate or other similar item constrained to the handlebar 13 and suitable to define, for the user, a seating surface, preferably substantially parallel to the second longitudinal axis, which, in the transport configuration, is placed essentially parallel to the gravitational gradient and, in particular, almost perpendicular to the ground.

Preferably, the sizing of the wheels 11 and 12 of the frame 1 is such as to have said seat at a height from the ground, i.e. a distance from the ground calculated parallel to the gravitational gradient between 0.4 and 0.6 m.

The folding frame 1 may lastly comprise at least one rotational stop 7 suitable to define a blocking position preventing a mutual rotation between the first portion 41 and first sector 43a or between the second portion 42 and second sector 43b and a position of freedom in which it allows such reciprocal rotation between said elements.

In particular, the rotational stop 7 defines the blocking position when the folding frame 1 is in the transport configuration and the position of freedom at least when the folding frame 1 is in the configuration of use. More specifically, the stop 7 defines the blocking position only when the folding frame 1 is in the transport configuration.

Advantageously, the frame 1 may comprise a first rotational stop 7 suitable to prevent or allow a mutual rotation between the first portion 41 and first sector 43a; and, in addition, a second rotational stop 7 suitable to prevent or allow a mutual rotation between the second portion 42 and second sector 43b.

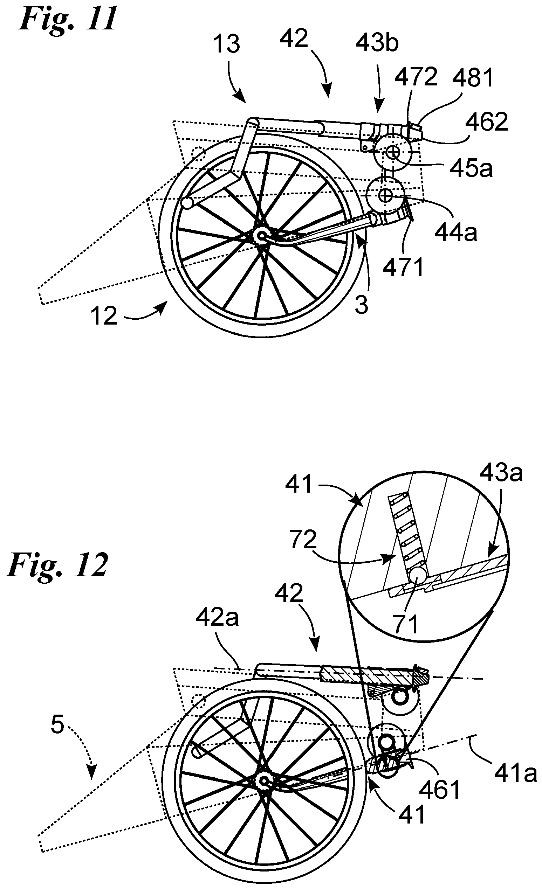

For simplicity, only the rotational stop 7 is shown in Figs. 6 and 12 only;
Each rotational stop 7 comprises a stop element **71** suitable to rotationally constrain the portion 41 or 42 to the relative sector 43a and 43b; and control means **72** suitable to allow the engagement of the stop element 71 to prevent said mutual rotation when the frame 1 is in the transport configuration and to allow such mutual rotation in the configuration of use.

The stop element 71 is housed at least partially in the portion 41 or 42. In detail, in the blocking position it protrudes partially from said portion 41 or 42 placing itself partially in a seat made on the sector 43a or 43b. While, in the position of freedom, the stop element 71 is entirely housed in the portion 41 or 42 so as to disengage from the sector 43a or 43b.

The control means 72 are suitable to control the movement of the stop element 71 between said positions in a transverse direction and, precisely, perpendicular to the longitudinal axis 41a or 42a. These may be elastic and, in particular, comprise a compression spring interposed between the element 71 and portion 41 or 42. The functioning of a folding frame, described above in a structural sense, is as follows.

In particular, the functioning of the frame 1 permits the definition of a new method of opening and closing a folding frame 1 and, thus, a folding cycle 10 provided with a frame 1.

The method comprises an extension step in which the folding frame 1 and thus the folding cycle 10 pass from the transport configuration (figs. 2, 4, 11 and 12) to that of use (Fig. 1, 3, 5 and 6); and a contraction step in which the folding frame 1 switches from the configuration of use to that of transport.

The extension step comprises a juxtaposition sub-step in which the first portion 41 and the second portion 42 are rotated in opposite directions so as to distance them from the structure 5 and, in particular, mutually juxtapose them.

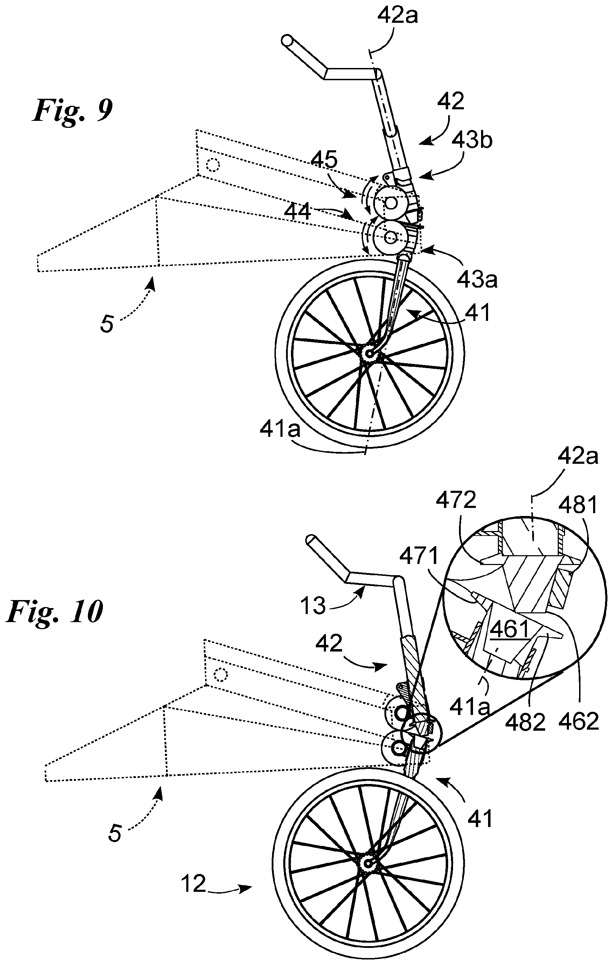

In detail, in this sub- step (figs. 9 and 10) the first portion 41, appropriately together with the first sector 43a, is rotated around the first rotation axis 44a so as to distance it from the supporting structure 5; and the second portion 42 and preferably the second sector 43b are rotated, in the opposite direction to the first portion 41, around the second axis of rotation 45a so as to move them away from the structure 5.

It is to be recalled that the possible connection mechanism makes it possible to move the portions 41 and 42 at the same time by pressing on one of the portions. Once the portions 41 and 42 are mutually aligned and, thus, the longitudinal axes 41a and 42a are parallel to each other and, in particular, coincident, the juxtaposition sub step is complete.

It is to be noted how at the end of this step, the second profile 462 and the tooth 481 are partially inserted respectively in the first engagement profile 461 and in the seat 482.

At this point the extension step provides for a blocking step (Figs. 7 and 8) in which the constraints 46, 47 and 48 are made.

In particular, at this point at least the second portion 42 and, in detail, both portions 41 and 42 are rotated, preferably by 180°, with respect to the head tube, i.e. the steering sectors 43a and 43b, and around the steering axis identified by the longitudinal axes 41a and 42a. In detail the first portion 41 is rotated relative to the first sector 43a and to the first hinge 44 around the first longitudinal axis 41a and, almost simultaneously, and in the same direction, the second portion 42 is rotated relative to the second sector 43b and to the second hinge 45 around the second longitudinal axis 42a which is now substantially coincident with the first longitudinal axis 41a.

This rotation causes the slider 491 to abandon the disengagement sector 492b, cross one of the connection sectors 492c and place itself in the sliding sector 492a.

This movement of the slider 491, thanks to the different axial distance of the sectors 492a and 492b from the first portion 41, makes the second portion 42 slide along the second longitudinal axis 42a with respect to the first portion 41 and, in particular, to the sectors 43a and 43b moving towards the first portion 41. Moreover, during this sub-step, the rotational stop 7 passes from the locked position to that of freedom. In detail, the torque, determining the rotation of the portions 41 and 42 in relation to the sectors 43a and 43b, imposes on the stop element 71 a greater force than that applied by the control means 72. Consequently, the element 71 comes out of the slot made on the sector 43a and 43b making a reciprocal rotation between the portion 41 and 42 and the relative sector 43a and 43b possible.

At the end of this sub-step (Figs. 5 and 6), the second profile 462 engages by interference the first engagement profile 461 realizing the constraint by interference 46; the magnetic body 472 comes into contact with the ferromagnetic body 471 constraining itself to it by magnetic attraction and hence realizing the magnetic constraint 47; and the tooth 481 engages the seat 482 completing the rotational constraint 48.

Lastly, the extension step comprises a sub-step of opening, preferably following the locking sub-step, in which the hollow section 61 is rotated around the folding axis 6a and distanced from the rear fork 2 and, thus, from the rear wheel 11.

It is to be noted how the possible synchronization mechanism 9 allows the opening and juxtaposition sub-steps to take place simultaneously.

In fact, the rotation of the second portion 42 determines a rotation of the active lever 91 and, thanks to the arm, the passive lever 92 which thus controls the rotation around the folding axis 6a of the hollow section 61 which can thus move into its position of configuration of use.

At this point, the frame 1 and the cycle 10 are in the configuration of use (Figs. 1 and 3) and suitable for use.

When the operator decides to place the folding frame 1 in the transport configuration (Figs. 2 and 4) he launches a contraction step practically opposite to the extension step.

The contraction step comprises, initially, a release sub-step of the constraints 46, 47 and 48 (Figs. 7 and 8).

In this sub-step, the second portion 42 and, in detail, both portions 41 and 42 are rotated, preferably by 180°, with respect to the head tube, and around the steering axis identified by the longitudinal axes 41a and 42a. More precisely the first portion 41 is rotated relative to the first sector 43a and to the first hinge 44 around the first longitudinal axis 41a and, almost simultaneously, and in the same direction, the second portion 42 is rotated relative to the second sector 43b and to the second hinge 45 around the second longitudinal axis 42a which is now substantially coincident with the first longitudinal axis 41a.

This rotation causes the slider 491 to abandon the sliding sector 492a, cross a connection sector 492c and place itself in the disengagement sector 492b.

Said movement of the slider 491, thanks to the different axial distance of the sectors 492a and 492b from the first portion 41, makes the second portion 42 slide along the second longitudinal axis 42a with respect to the first portion 41 moving the second portion 42 away from the first 41.

Consequently, the second profile 462 is disengaged from the first engagement profile 461 dissolving the interference constraint 46; the magnetic body 472 is moved away from the ferromagnetic body 471 dissolving the magnetic constraint 47; and the tooth 481 is at least partially removed from the seat 482 allowing the dissolving of the rotational constraint 48.

Moreover, during this sub-step, the rotational stop 7 passes from the position of freedom to the locked position In particular, the stop element 71 faces the seat made on the sector 43a and 43b and, pushed by the control means 72, is inserted in it, preventing the rotation of the portions 41 and 42 with respect to the sectors 43a and 43b.

At this point the contraction step provides for a distancing sub-step (Figs. 9 and 10) in which the first portion 41, appropriately along with the first sector 43a, and the second portion 42, appropriately together with the second sector 43b, are rotated in opposite directions so as to move them away from each other and, in particular, juxtapose them to the supporting structure 5.

In particular, the second portion 42 is juxtaposed to the structure 5 appropriately adjacent to the upper surface 5b; while the first portion 41 is juxtaposed to the lower surface and, precisely, inserted in the inner housing 5c.

In particular, said movement of the first portion 41 places the front wheel 12 in the inner housing 5c preventing said front wheel 12 and, therefore, the integral first portion 41 from rotating with respect to the first sector 43a around the first longitudinal axis 41a.

Lastly, the contraction step comprises a sub-step of closing, preferably prior to the release sub-step, in which the hollow section 61 is rotated around the folding axis 6a and positioned proximal to the rear fork 2.

It is to be noted that the presence of the synchronization mechanism 9 may allow the simultaneous performance of the sub-steps of closing and distancing.

At this point, the folding frame 1 and thus the cycle 10 are in the transport configuration (Figs. 2, 4, 11 and 12).

The invention achieves important advantages.

A first advantage is the fact that the folding frame 1 is able to define a particularly compact transport configuration ensuring, accordingly, reduced overall dimensions of the folding cycle 10 contracted on itself.

This aspect is guaranteed by having innovatively divided the steering bar 4 into two distinct portions which, rotating with respect to the supporting structure 5 in opposite directions, makes it possible to move both the handlebar 13 and the front wheel towards the frame 1.

Furthermore, the compactness of the folded frame 1 is guaranteed by the presence of a housing 5c inside the supporting structure 5 in which at least part of the front wheel 12 is placed.

Another advantage is the fact that the folding frame 1 is stable and, above all, able to withstand high loads.

This advantage is ensured by the fact that the axes of rotation 44a and 45a are substantially perpendicular to the lying plane 5a and, therefore, the user's weight does not weigh on the hinges 44 and 45 but, instead, is almost totally absorbed by the supporting structure 5 and discharged onto the wheels 11 and 12.

Such stability is also guaranteed by the presence of the interference constraint 46 which, by allowing the portions 41 and 42 to penetrate each other makes the mechanical strength of the steering bar 4 to stresses/tensions substantially similar to the resistance of a known steering bar even if divided into distinct portions.

A further advantage is given by the presence of the constraints 46, 47 and 48 which, by allowing reciprocal movement between the portions 41 and 42, lends considerable stability to the frame 1 and, particularly, avoids sudden and unexpected mutual movements between the said portions.

Variations may be made to the invention without departing from the scope of the inventive concept described in the appended claims.

## Claims

1. Foldable frame (1) configurable in a transport configuration and in a configuration of use; the foldable frame (1) comprising
- at least a rear fork (2);
- at least a front fork (3);
- a steering bar (4) to be secured to said front fork (3) and to a handlebar (13); wherein said steering bar (4) comprises a first portion (41) integral with said front fork (3) and defining a first longitudinal axis (41a) **and** a second portion (42) suitable to be connected to the handlebar (13) and defining a second longitudinal axis (42a);
- a supporting structure (5) connecting said rear fork (2) to said steering bar (4);
- a head tube defining a steering axis of said steering bar (4) with respect to said supporting structure (5); said head tube comprising first and second sectors (43a, 43b), the first sector (43a) allowing said first portion (41) to rotate with respect to said supporting structure (5) around said first longitudinal axis (41a) and the second sector (43b) allowing said second portion (42) to rotate with respect to said supporting structure (5) around said second longitudinal axis (42a);
- a first hinge (44) to hinge said first portion (41) to said supporting structure (5) defining a first axis of rotation (44a) of said first portion (41) with respect to said supporting structure (5); and a second hinge (45) to hinge said second portion (42) to said supporting structure (5) defining a second axis of rotation (45a) of said second portion (42) with respect to said supporting structure (5); wherein said first axis of rotation (44a) being parallel to and separate from said second axis of rotation (45a); said first axis of rotation (44a) of said first portion (41) being transverse to said first longitudinal axis (41a) and said second axis of rotation (45a) of said second portion (42) being transverse to said second longitudinal axis (42a) and so that said foldable frame (1) is configurable in said transport configuration by rotating both said first portion (41) about said first axis of rotation (44a) and said second portion (42) about said second axis of rotation (45a) in opposite directions to each other and with respect to said supporting structure (5) until said portions (41, 42) are juxtaposed to said supporting structure (5) on opposite sides thereof and said distinct longitudinal axes (41a, 42a) being non-coincident and so that in said configuration of use of said foldable frame (1) said first and second portions (41, 42) are aligned with each other and said longitudinal axes (41a, 42a) are placed coincident with each other;
- and wherein the steering bar (4) further comprises a rotational constraint (48) of the resolvable type between said portions (41, 42) preventing exclusively in said configuration of use a mutual rotation between said portions (41, 42) around said longitudinal axes (41a, 42a);
**characterised in that** said foldable frame (1) comprises a translation block (49) to command the dissolution of said rotational constraint (48) by translating said second portion (42) a distance away from said first portion (41) along said second longitudinal axis (42a); wherein said translation block (49) comprises a slider (491) integral with said second portion (42) of said steering bar (5) and a sliding slot (492) for said slider (491) integral with said second sector (43b) of said head tube; wherein said sliding slot (492) comprises a sliding sector (492a) and a disengagement sector (492b) having a distance from said first portion (41) of said steering bar (5) greater than said sliding sector (492a) and defining a stroke of the second portion (42) relative to the first portion (41) to permit the loosening of the rotational constraint (48).

2. Foldable frame (1) according to the preceding claim, wherein said first sector (43a) is interposed between said first hinge (44) and said first portion (41) so as to rotate, together with said first portion (41) around said first axis of rotation (44a); and wherein said second sector (43b) is interposed between said second hinge (45) and said second portion (42) so as to rotate together with said second portion (42), around said second axis of rotation (45a).

3. Foldable frame (1) according to one or more of the preceding claims, wherein said supporting structure (5) defines a barycentric lying plane (5a); wherein said axes of rotation (44a, 45a) are substantially parallel to each other and substantially perpendicular to said barycentric lying plane (5a); and wherein the distance between said axes of rotation (44a, 45a) is substantially between 10 cm and 5 cm.

4. Foldable frame (1) according to one or more of the preceding claims, wherein, in said transport configuration, said longitudinal axes (41a, 42a) are substantially transversal to each other.

5. Foldable frame (1) according to the preceding claim wherein the difference between said distance of the disengagement sector (492b) from said first portion (41) and said distance of the sliding sector (492a) from said first portion (41) is substantially comprised between 0.5 cm and 1.5 cm.

6. Foldable frame (1) according to one or more of the preceding claims, wherein said steering bar (4) comprises a connection mechanism (8) suitable to allow a transfer of movement between said hinges (44, 45) enabling said portions (41, 42) to simultaneously rotate in opposite directions to each other.

7. Foldable frame (1) according to the preceding claim, wherein said connection mechanism (8) comprises a first toothed wheel (81) integral with said first hinge (44) and suitable to rotate around said first axis of rotation (44a) and a second toothed wheel (82) integral with said second hinge (45), suitable to rotate around said second axis of rotation (45a) and engaged with said first toothed wheel so as to have a passage of movement between said hinges (44, 45).

## Patentansprüche

1. Zusammenklappbarer Rahmen (1), der in eine Transportkonfiguration und in eine Gebrauchskonfiguration konfiguriert werden kann; wobei der zusammenklappbare Rahmen (1) Folgendes umfasst:
- mindestens eine rückseitige Gabel (2);
- mindestens eine vordere Gabel (3);
- eine an der genannten vorderen Gabel (3) und an einem Lenker (13) zu sichernde Lenkstange (4); wobei die genannte Lenkstange (4) einen mit der genannten vorderen Gabel (3) verbundenen ersten Abschnitt (41) umfasst, der eine erste Längsachse (41a) definiert, **und**
einen zweiten Abschnitt (42), der geeignet ist, mit dem
Lenker (13) verbunden zu werden und eine zweite Längsachse (42a) definiert;
- eine Tragkonstruktion (5), die die genannte rückseitige Gabel (2) mit der genannten Lenkstange (4) verbindet;
- ein Steuerrohr, das eine Lenkachse der genannten Lenkstange (4) im Verhältnis zu der genannten Tragkonstruktion (5) definiert; wobei das genannte Steuerrohr erste und zweite Abschnitte (43a, 43b) umfasst und der erste Abschnitt (43a) das Drehen des genannten ersten Abschnitts (41) im Verhältnis zu der genannten
- Tragkonstruktion (5) um die genannte erste Längsachse (41 a) gestattet und der zweite Abschnitt (43b) das Drehen des genannten zweiten Abschnitts (42) im Verhältnis zu der genannten Tragkonstruktion (5) um die genannte zweite Längsachse (42a) gestattet;
- ein erstes Scharnier (44), um den genannten ersten Abschnitt (41) mit der genannten Tragkonstruktion (5) gelenkig zu verbinden und eine erste Drehachse (44a) des genannten ersten Abschnitts (41) im Verhältnis zu der genannten Tragkonstruktion (5) zu definieren; und ein zweites Scharnier (45), um den genannten zweiten Abschnitt (42) mit der genannten Tragkonstruktion (5) gelenkig zu verbinden und eine zweite Drehachse (45a) des genannten zweiten Abschnitts (42) im Verhältnis zu der genannten Tragkonstruktion (5); wobei die genannte erste Drehachse (44a) parallel zu und getrennt von der zweiten Drehachse (45a) ist; und die erste Drehachse (44a) des genannten ersten Abschnitts (41) quer zu der genannten
ersten Längsachse (41 a) verläuft und die genannte zweite Drehachse (45a) des genannten
zweiten Abschnitts (42) quer zu der genannten zweiten
Längsachse (42) verläuft und so der genannten zusammenklappbare Rahmen (1) in der genannten Transportkonfiguration konfiguriert werden kann, indem der genannte erste Abschnitt (41) um die genannte erste Drehachse (44a) und der genannte zweite Abschnitt (42) um die genannte zweite Drehachse (45a) in zueinander entgegengesetzten Richtungen und im Verhältnis zu der genannten Tragkonstruktion (5) gedreht werden, bis die genannten Abschnitte (41, 42) und die genannte Tragkonstruktion (5) auf gegenüberliegenden Seiten derselben nebeneinanderliegen und die genannten verschiedenen Längsachsen (41a, 42b) nicht übereinstimmen, und so dass in der genannten Gebrauchskonfiguration des genannten zusammenklappbaren Rahmens (1) der erste und zweite Abschnitt (41, 42) miteinander ausgerichtet sind und die genannten Längsachsen (41a, 42a) miteinander übereinstimmend platziert sind; und wobei die Lenkstange (4) außerdem eine Drehsperre (48) lösbaren Typs zwischen den genannten Abschnitten (41, 42) umfasst, die ausschließlich in der genannten Gebrauchskonfiguration ein gegenseitiges Drehen zwischen den genannten Abschnitten (41, 42) um die genannten Längsachsen (41a, 42a) verhindert,
**dadurch gekennzeichnet, dass**
der genannte zusammenklappbare Rahmen (1) einen Übersetzungsblock (49) umfasst, um das Lösen der genannten Drehsperre (48) zu steuern, indem der genannte zweite Abschnitt (42) von dem genannten ersten Abschnitt (41) entlang der genannten zweiten Längsachse (42a) in einen Abstand gebracht wird;
wobei
der genannte Übersetzungsblock (49) einen mit dem genannten zweiten Abschnitt (42) der genannten Lenkstange (5) verbundenen Schieber (491)
und
ein Schiebelangloch (492) für den mit dem genannten zweiten Abschnitt (43b) des genannten Steuerrohrs verbundenen Schieber (491)
umfasst; wobei
das genannte Schiebelangloch (492) einen Schiebeabschnitt (492a) und einen Löseabschnitt (492b) in einem Abstand von dem genannten ersten Abschnitt (41) der genannten Lenkstange (5) umfasst, der größer als der genannte Schiebeabschnitt (492a) ist und
einen Hub des zweiten Abschnitts (42) im Verhältnis zu dem ersten Abschnitt (41) definiert, um das Lösen der Drehsperre (48) zu gestatten.

2. Zusammenklappbarer Rahmen (1) nach dem vorangegangenen Anspruch, bei dem der genannte erste Abschnitt (43a) zwischen dem genannten ersten Scharnier (44) und dem genannten ersten Abschnitt (41) positioniert ist, um zusammen mit dem genannten ersten Abschnitt (41) um die genannte erste Drehachse (44a) zu drehen; und
bei dem der genannte zweite Abschnitt (43b) zwischen dem genannten zweite Scharnier (45) und
dem genannten zweite Abschnitt (42) positioniert ist, um zusammen mit dem genannten zweiten Abschnitt (42), um die genannte zweite Drehachse (45a) zu drehen.

3. Zusammenklappbarer Rahmen (1) nach einem oder mehreren der vorangegangenen Ansprüche, bei dem die genannte Tragkonstruktion (5) eine baryzentrische Lageebene (5a) definiert; bei dem die genannten Drehachsen (44a, 45a) im Wesentlichen parallel zueinander sind und im Wesentlichen senkrecht zu der genannten baryzentrischen Lageebene (5a) verlaufen; und bei dem der Abstand zwischen den genannten Drehachsen (44a, 45a) im Wesentlichen zwischen 10 cm und 5 cm beträgt.

4. Zusammenklappbarer Rahmen (1) nach einem oder mehreren der vorangegangenen Ansprüche, bei dem in der genannten Transportkonfiguration die genannten Längsachsen (41a, 42a) im Wesentlichen quer zueinander verlaufen.

5. Zusammenklappbarer Rahmen (1) nach dem vorangegangenen Anspruch, bei dem die Differenz zwischen dem genannten Abstand des Löseabschnitts (492b) von dem genannten ersten Abschnitt (41) und der genannte Abstand des Schiebeabschnitts (492a) von dem genannten ersten Abschnitt (41) im Wesentlichen zwischen 0,5 cm und 1,5 cm beträgt.

6. Zusammenklappbarer Rahmen (1) nach einem oder mehreren der vorangegangenen Ansprüche, bei dem die genannte Lenkstange (4) einen Verbindungsmechanismus (8) umfasst, der geeignet ist, eine Bewegungsübertragung zwischen den genannten Scharnieren (44, 45) zu gestatten, um die genannten Abschnitte (41, 42) in die Lage zu versetzen, gleichzeitig in entgegengesetzte Richtungen zu drehen.

7. Zusammenklappbarer Rahmen (1) nach dem vorangegangenen Anspruch, bei dem der genannte Verbindungsmechanismus (8) ein mit dem genannten ersten Scharnier (44) verbundenes erstes Zahnrad (81) umfasst, das geeignet ist, um die genannte erste Drehachse (44a) zu drehen und ein zweites mit dem genannten zweiten Scharnier (45) verbundenes zweites Zahnrad (82), das geeignet ist, um die genannte zweite Drehachse (45a) zu drehen und sich mit dem genannten ersten Zahnrad in Eingriff befindet, um einen Bewegungsübertragung zwischen den beiden genannten Scharnieren (44, 45) zu erzielen.

## Revendications

1. Cadre pliable (1) configurable
dans une configuration de transport et dans une configuration d'utilisation ; le cadre pliable (1) comprenant :
- au moins une fourche arrière (2) ;
- au moins une fourche avant (3) ;
- une barre de direction (4) à fixer sur ladite fourche avant (3) et à un guidon (13); dans lequel ladite barre de direction (4) comprend une première partie (41) solidaire de ladite fourche avant (3) et définissant un premier axe longitudinal (41a) **et** une deuxième partie (42) apte à être raccordée au guidon (13) et définissant un deuxième axe longitudinal (42a) ;
- une structure de support (5) raccordant ladite fourche arrière (2) à ladite barre de direction (4) ;
- un tube de direction définissant un axe de direction de ladite barre de direction (4) par rapport à ladite structure de support (5) ;
et ledit tube de direction comprenant un premier et un deuxième secteur (43a, 43b), le premier secteur (43a) permettant à ladite première partie (41) de tourner par rapport à ladite structure de support (5) autour dudit premier axe longitudinal (41a) ;
et le deuxième secteur (43b) permettant à ladite deuxième section (42) de tourner par rapport à ladite structure de support (5) autour dudit deuxième axe longitudinal (42a) ;
- une première charnière (44) pour articuler ladite première partie (41) à ladite structure de support (5) définissant un premier axe de rotation (44a) de ladite première partie (41) par rapport à ladite structure de support (5) ; et une deuxième charnière (45) pour articuler ladite deuxième partie (42) à ladite structure de support (5) définissant un deuxième axe de rotation (45a) de ladite deuxième partie (42) par rapport à ladite structure de support (5) ; ledit premier axe de rotation (44a) étant parallèle à et séparé dudit deuxième axe de rotation (45a) ; ledit premier axe de rotation (44a) de ladite première partie (41) étant transversal audit premier axe longitudinal (41a) et ledit deuxième axe de rotation (45a) de ladite deuxième partie (42) étant transversal audit deuxième axe longitudinal (42a) et de sorte que ledit cadre pliable (1) est configurable dans ladite configuration de transport par la rotation de ladite première partie (41) autour dudit axe de rotation (44a) et de ladite deuxième partie (42) autour dudit deuxième axe de rotation (45a) dans des directions opposées l'une à l'autre et par rapport à ladite structure de support (5) jusqu'à ce que lesdites parties (41, 42) soient juxtaposées à ladite structure de support (5) sur les côtés opposés de cette dernière et lesdits axes longitudinaux distincts (41a, 42a) soient non-coïncidents et de sorte que dans ladite configuration d'utilisation dudit cadre pliable (1) lesdites première et deuxième parties (41, 42) sont alignées l'une sur l'autre et lesdits axes longitudinaux (41a, 42a) sont placés de manière coïncidente l'une à l'autre ; et dans lequel la barre de direction (4) comprend en outre un élément rotatif de contrainte (48) de type séparable entre lesdites parties (41, 42) évitant exclusivement dans ladite configuration d'utilisation une rotation mutuelle entre lesdites parties (41, 42) autour desdits axes longitudinaux (41a, 42a)
**caractérisé en ce que**
ledit cadre pliable (1) comprend un bloc de translation (49) pour commander la séparation dudit élément rotatif de contrainte (48) par la translation de ladite deuxième partie (42) à une certaine distance de ladite première partie (41) le long dudit deuxième axe longitudinal (42a) ; dans lequel ledit bloc de translation (49) comprend un curseur (491) solidaire de ladite deuxième partie (42) de ladite barre de direction (5) et une fente de coulissement (492) pour ledit curseur (491) solidaire dudit deuxième secteur (43b) dudit tube de direction ; dans lequel ladite fente de coulissement (492) comprend un secteur de coulissement (492a) et un secteur de dégagement (492b) dont la distance entre ladite première partie (41) de ladite barre de direction (5) est supérieure à celle du secteur de coulissement (492a) et définissant une course de la deuxième partie (42) relative à la première partie (41) pour permettre le desserrage de l'élément rotatif de contrainte (48).

2. Cadre pliable (1) selon la revendication précédente, dans lequel ledit premier secteur (43a) est interposé entre ladite première charnière (44) et ladite première partie (41) de façon à tourner, avec ladite première partie (41), autour dudit premier axe de rotation (44a) ; et dans lequel ledit deuxième secteur (43b) est interposé entre ladite deuxième charnière (45) et ladite deuxième partie (42) de façon à tourner, avec ladite deuxième partie (42), autour dudit deuxième axe de rotation (45a) ;

3. Cadre pliable (1) selon l'une ou plusieurs des revendications précédentes dans lequel ladite structure de support (5) définit un plan de positionnement barycentrique (5a) dans lequel lesdits axes de rotation (44a, 45a) sont essentiellement parallèles l'un à l'autre et essentiellement perpendiculaires audit plan de positionnement barycentrique (5a) ; et dans lequel la distance entre lesdits axes de rotation (44a, 45a) est essentiellement comprise entre 10 cm et 5 cm.

4. Cadre pliable (1) selon l'une ou plusieurs des revendications précédentes dans lequel, dans ladite configuration de transport, lesdits axes longitudinaux (41a, 42a) sont essentiellement transversaux l'un à l'autre.

5. Cadre pliable (1) selon la revendication précédente, dans lequel la différence entre ladite distance du secteur de dégagement (492b) de ladite première partie (41) et ladite distance du secteur de coulissement (492a) de ladite première partie (41) est essentiellement comprise entre 0,5 cm et 1,5 cm.

6. Cadre pliable (1) selon l'une ou plusieurs des revendications précédentes, dans lequel ladite barre de direction (4) comprend un mécanisme de connexion (8) apte à permettre un transfert de mouvement entre lesdites charnières (44, 45) permettant auxdites parties (41, 42) de tourner simultanément dans des directions opposées l'une à l'autre.

7. Cadre pliable (1) selon la revendication précédente, dans lequel ledit mécanisme de connexion (8) comprend une première roue dentée (81) solidaire de ladite première charnière (44) et apte à tourner autour dudit premier axe de rotation (44a) et une deuxième roue dentée (82) solidaire de ladite deuxième charnière (45), apte à tourner autour dudit deuxième axe de rotation (45a) et s'engrenant avec ladite première roue dentée pour créer un transfert de mouvement entre lesdites charnières (44, 45).
